## Europäisches Patentamt

## European Patent Office

## Office européen des brevets

(19)

(11) Veröffentlichungsnummer: **0 051 128**
B1

(12) **EUROPÄISCHE PATENTSCHRIFT**

(45) Veröffentlichungstag der Patentschrift:
14.12.83

(51) Int. Cl.³: **F 23 D 13/40**, F 23 K 5/00,
F 02 M 21/04

(21) Anmeldenummer: 81106942.6

(22) Anmeldetag: 04.09.81

(54) Mischblock zum Einlassen eines brennbaren Gasgemisches in einem Brennraum.

(30) Priorität: 31.10.80 DE 3041059

(43) Veröffentlichungstag der Anmeldung:
12.05.82 Patentblatt 82/19

(45) Bekanntmachung des Hinweises auf die Patenterteilung:
14.12.83 Patentblatt 83/50

(84) Benannte Vertragsstaaten:
DE FR GB IT

(56) Entgegenhaltungen:
DE - A - 2 440 040
DE - B - 2 322 760
DE - B - 2 758 179
GB - A - 1 035 088

(73) Patentinhaber: **ROBERT BOSCH GMBH, Postfach 50, D-7000 Stuttgart 1 (DE)**

(72) Erfinder: **Mauz, Wolfgang, Dr.Dipl.-Ing., Unterer Kasparswald 6, D-7022 Leinfelden-Echterdingen 3 (DE)**

## Mischblock zum Einlassen eines brennbaren Gasgemisches in einen Brennraum

Stand der Technik

Die Erfindung geht aus von einem Mischblock nach der Gattung des Patentanspruchs 1. Bei den besonders in Bezug genommenen, bekannten Maschinen zum thermischen Entgraten findet unter dem Einfluss von Wärme ein chemischer Prozess statt. Beim thermischen Entgraten wird der abzutragende Werkstoff mit Sauerstoff oxidiert bzw. verbrannt. Der zum Entgraten notwendige Hitzeschock wird durch das Abbrennen eines Brenngas-Sauerstoff-Gemisches erzeugt, wobei Wasserstoff oder Erdgas bzw. Methan als Brenngas verwendet werden können. Um die notwendige Energie freisetzen zu können, muss das Gasgemisch vor dem Entzünden komprimiert werden. Dies geschieht mit Hilfe von Dosierzylindern und Gaseinstosszylindern. Die Vermischung und Zündung des Brenngas-Sauerstoff-Gemisches erfolgt in einem separaten Mischblock.

Bekannte Mischeinrichtungen, wie sie beispielsweise in der DE-OS 24 39 982 beschrieben sind, bestehen aus einem einstückigen Gehäuse, in welchem sich die Mischkammer mit Zündeinrichtung befindet. Diese Mischkammer ist über verhältnismässig lange Kanäle (Gaszuführungsbohrungen) mit den Gaszuführungsanschlüssen am Mischblock verbunden. Dazwischen sind Ventile angeordnet, die die Gaszufuhr unterbrechen können. Die langen Gaszuführungsbohrungen dienen dem Schutz der Ventile beim Durchzünden des stark komprimierten Gases. Bekannte Mischblöcke haben den Nachteil, dass sie durch die vielen Querbohrungen mit unterschiedlichen Durchmessern ausserordentlich kompliziert aufgebaut sind, was sich ungünstig auf die Herstellungskosten auswirkt. Die Längs- und Querbohrungen im Mischblock müssen zum Teil wieder verschlossen werden, damit das Gas im Block in bestimmter Weise umgelenkt wird. Abschlussventile und Anschlüsse sind nur von aussen her einsetzbar.

Vorteile der Erfindung

Die erfindungsgemässe Vorrichtung mit den kennzeichnenden Merkmalen des Patentanspruchs 1 hat demgegenüber den Vorteil, dass die Herstellung des Mischblocks sowie die Kontrolle und Wartung sehr stark vereinfacht wurde. Durch Aufteilung des Mischblocks in zwei bzw. drei Teile ergeben sich abgeschlossene Baueinheiten mit verschiedenen Funktionen (siehe Beschreibung). Durch den erfindungsgemässen Aufbau können sämtliche Bohrungen als Durchgangsbohrungen oder Sacklochbohrungen ausgeführt werden, wobei die Querverbindungen zwischen den Bohrungen an den Trennstellen der einzelnen Blöcke einfach ausgefräst werden können. Hierdurch enthält der Mischblock nur dort Bohrungen, wo sie auch wirklich benötigt werden, d.h. Sacklochbohrungen mit Blindverschlüssen im Bereich der Trennstellen der einzelnen Blöcke können entfallen. Ein weiterer Vorteil des erfindungsgemässen mehrteiligen Aufbaus des Mischblocks besteht darin, dass handelsübliche Tellerventile (z.B. Automobilventile) zur Verschliessung der Gasanschlussbohrungen verwendet werden können. Da diese Ventile von innen nach aussen eingesetzt werden, wirkt sich der Explosionsdruck unterstützend auf die Dichtfunktion aus. Da hierbei Ventile aus Hochtemperaturlegierungen verwendbar sind, braucht die Gaszuführungsbohrung zwischen Mischkammer und Ventil nicht mehr so lang ausgebildet werden, da das Ventil unempfindlicher ist als herkömmliche, bisher verwendete Ventile. Weiterhin ergeben sich durch den getrennten Aufbau kleinere Verschleisseinheiten, die leichter und billiger ersetzt werden können.

Die so hergestellten Einzelteile des Mischblocks werden zu einem Gesamtblock verschraubt und z.B. an eine Anlage zum thermischen Entgraten montiert.

Durch die in den abhängigen Ansprüchen angegebenen Massnahmen sind vorteilhafte Weiterbildungen und Verbesserungen der im Patentanspruch 1 angegebenen Vorrichtung möglich. Besonders vorteilhaft ist weiterhin, dass durch den erfindungsgemässen Aufbau an Stellen, die einem besonders starken Abbrand ausgesetzt sind (z.B. Ende der Zündbohrung), Einsätze aus temperatur- und abbrandbeständigen Stoffen eingesetzt werden können. Hierdurch hat der Mischblock eine wesentliche höhere Lebensdauer.

Die erfindungsgemässe Einrichtung ist selbstverständlich nicht auf eine Anlage zum thermischen Entgraten von Werkstücken beschränkt, da eine derartige Anlage zahlreiche Anwendungsgebiete hat. So kann mit der in der Beschreibung näher dargestellten Anlage ebenso z.B. das «Retikulieren von Schaumstoff» nach DE-Patent 1 504 096 oder das «Verfahren zum Entfernen von zusammenhängenden porösen Formen» nach dem DE-Patent 2 322 760 durchgeführt werden. Massgeblich ist der Bearbeitungsvorgang an einem Werkstück mittels eines explosiven Gasgemisches in einer abgeschlossenen Kammer.

Zeichnung

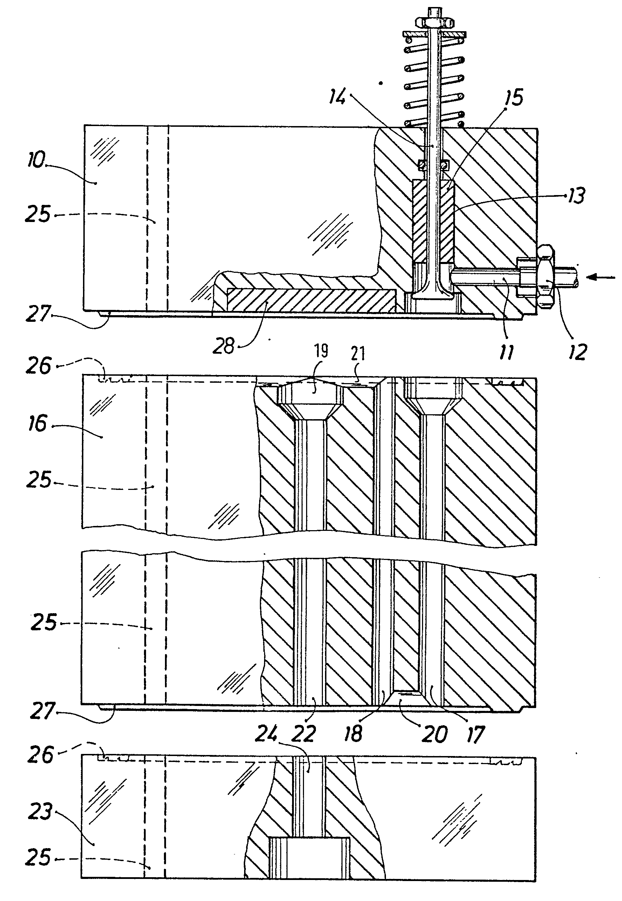

Ein Ausführungsbeispiel der Erfindung ist in der Zeichnung dargestellt und in der nachfolgenden Beschreibung näher erläutert. Die Figur zeigt eine schematische Darstellung eines Mischblocks aus drei Teilen.

Beschreibung der Erfindung

Der in der Figur dargestellte erfindungsgemässe Mischblock besteht aus drei Teilen. Der oberste Block 10 enthält eine Gasanschlussbohrung 11 für jede Gaskomponente des Gasgemisches. Bei Verwendung eines Gasgemisches aus Sauerstoff und Brenngas sind demnach zwei Gasanschlussbohrungen 11 vorhanden. Der Gasanschluss an den Block 10 erfolgt über Anschlussmittel 12, z.B. eine Schraubverbindung.

Senkrecht zur Gasanschlussbohrung 11 und mit dieser verbunden enthält der Block 10 eine weitere Bohrung 13 zur Aufnahme eines Abdichtventils 14. Die Bohrung 13 für das Ventil 14 ist dabei in herkömmlicher Art, d.h. ähnlich wie in einem Motoren-Zylinderkopf, ausgestaltet. Eine Ventilführung 15 dient der genaueren Justierung des Ventils 14. Der Ventilteller des Ventils 14 ist dem weiteren Block 16 des erfindungsgemässen Mischblocks zugewandt, wobei sich zwischen Ventilteller und Block 10 ein herkömmlich ausgebildeter verschleissfester Ventilsitz befindet.

Der mittlere Block 16 des erfindungsgemässen Mischblocks enthält sämtliche Gasvorlagebohrungen, das sind die langen Gaszuführungsbohrungen 17, 18 zwischen Ventilsitz des Ventils 14 im ersten Block 10 und einer Mischkammer 19 im mittleren Block 16. Diese langen Leitungen 17, 18 für jede Komponente des Brenngases dienen dem Schutz der Ventile gegen Abbrand und Verunreinigungen. Zur Herstellung der Gaszuführungsbohrung 17, 18 wird der mittlere Block 16 zweimal in Längsrichtung durchbohrt. Die Gaszuführungsbohrungen 17, 18 münden in die Mischkammer 19, die als zentrale Längsbohrung im mittleren Bereich des Blocks 16 ausgebildet ist. Im Bereich der Mischkammer 19 ist der Mischblock einem besonders starken Abbrand ausgesetzt, hervorgerufen durch die rückschlagende Flammenfront. In diesem Bereich wird deshalb dem oberen Block 10 ein Verschleissteil 28 aus temperatur- und abbrandbeständigem Material eingesetzt.

Die parallel verlaufenden Bohrungen 17, 18, 19 werden an der Mantelfläche des Blocks 16 durch diese Bohrungen verbindende Ausfräsungen 20, 21 miteinander verbunden. Hierdurch erübrigen sich weitere Querbohrungen, die von aussen wieder verstopft werden müssen.

Der mittlere Block 16 enthält für jede Gaskomponente des Brenngasgemisches eine Gaszuführungsbohrung 17, 18, die in die Mischkammer 19 mündet.

Die in Längsrichtung des mittleren Blocks 16 vorgesehene Gasabführungsbohrung 22 mündet in die Mischkammer 19. Im Bereich der Mischkammer 19 bzw. der Gasabführungsbohrung 22 ist die nicht näher dargestellte Zündeinrichtung zur Zündung des Gasgemisches angeordnet.

Der erfindungsgemässe Mischblock enthält im Ausführungsbeispiel einen dritten, flanschartig ausgebildeten Block 23, der die Gasbohrung 24 zur Brennkammer und die Anschlusselemente zwischen Mischblock und Brennkammer enthält. Im Ausführungsbeispiel dient dieser Block 23 jedoch vornehmlich zur Verschliessung der Querausfräsung 20 zwischen den Längsbohrungen 17, 18. Bei Ausführung dieser Querverbindungen 20 als Bohrungen könnte der dritte Block 23 eingespart werden. In diesem Fall müssten die Anschlussverbindungen zwischen Brennkammer und Mischblock direkt mit dem Block 16 verbunden werden.

Die Blöcke 10, 16, 23 enthalten aufeinander abgestimmte Durchgangsbohrungen 25 zur festen Verbindung der Blöcke mittels einer Verschraubung. Die Abdichtung zwischen den Blöcken 10, 16, 23 kann mittels herkömmlichen Dichtmethoden für derartig beanspruchte Teile erfolgen. Hierfür kann das z.B. quaderförmig ausgebildete Mischblockgehäuse ringförmige Dichtungsrillen 26 zum Einlegen von nicht näher dargestellten Metalldichtungen aufweisen. Die Gegenseite der Gehäusetrennfläche enthält einen angepassten Vorsprung 27, der auf die Metalldichtung einwirkt und diese plastisch verformt. Es können jedoch auch Dichtungen verwendet werden, die nach Art einer Kraftfahrzeugzylinderkopfdichtung ausgebildet sind.

**Patentansprüche**

1. Mischblock zum Einlassen eines aus mindestens zwei Komponenten bestehenden brennbaren Gasgemisches in einen Brennraum, insbesondere den Brennraum einer Vorrichtung zur Behandlung von Materialien mittels Temperatur- und Druckstössen durch Zünden eines Arbeitsmittels, wie thermische Entgratanlagen, mit einem Gehäuse mit wenigstens zwei über einen Querkanal (20) miteinander verbundenen Gaszuführungsbohrungen (17, 18) für jede Gaskomponente und wenigstens einer Gasabführungsbohrung (22, 24) zur Weiterleitung des brennbaren Gemisches zum Brennraum und einer Zündvorrichtung innerhalb des Mischblockes, dadurch gekennzeichnet, dass das Gehäuse aus mehreren, trennbaren Gehäuseblöcken (10, 16, 23) besteht, von denen ein erster Block (10) wenigstens zwei Gasanschlussbohrungen (11) mit Absperrventilen (14), und ein zweiter Block (16) die Gaszuführungsbohrungen (17, 18) mit Querkanal (20) sowie eine Querverbindung (21) zum Zuführen der jeweiligen Komponente von jeder Gaszuführungsbohrung (17, 18) zu einer innerhalb des Blocks gelegenen Mischkammer (19) sowie die mit der Mischkammer in Verbindung stehende Gasabführungsbohrung (22) enthält, wobei wenigstens eine Querverbindung (21) zwischen Mischkammer und Gaszuführungsbohrung (21) zwischen Mischkammer und Gaszuführungsbohrung als Vertiefung, durch Ausfräsung und/oder Bohrung, in der dem ersten Block (10) zugekehrten Stirnfläche des zweiten Blocks (16) ausgebildet ist.

2. Mischblock nach Anspruch 1, dadurch gekennzeichnet, dass jede Gasanschlussbohrung (11) Anschlussmittel (12) für eine Gasleitung enthält, und dass die Gasanschlussbohrung (11) durch ein Ventil (14) gegenüber der Gaszuführungsbohrung (17) verschliessbar ist.

3. Mischblock nach Anspruch 1 oder 2, dadurch gekennzeichnet, dass jede der Gaszuführungsbohrungen (17, 18) als parallel verlaufende Längs-Durchgangsbohrungen durch den zweiten Block (16) des Mischblockgehäuses ausgebildet sind.

4. Mischblock nach Anspruch 1, 2 oder 3, dadurch gekennzeichnet, dass die Mischkammer (19) und eine zugeordnete Gasabführungsbohrung (22) als Längs-Durchgangsbohrung durch den zweiten Block (16) des Mischblockgehäuses ausgebildet ist.

5. Mischblock nach einem der vorhergehenden Ansprüche, dadurch gekennzeichnet, dass der zweite Gehäuseblock (16) des Mischblockgehäuses mit einem dritten, flanschartig ausgebildeten Gehäuseblock (23) verbunden ist, dass der dritte Block eine mit der Gasabführungsbohrung (22) des Gehäuseblocks (16) fluchtende Gasabführungsbohrung (24) enthält, und dass wenigstens ein Querkanal (20) zwischen den Gaszuführungsbohrungen (17, 18) als Vertiefung, durch Ausfräsung und/oder Bohrung, in der dem dritten Block (23) zugekehrten Stirnfläche des zweiten Blocks (16) ausgebildet ist.

6. Mischblock nach einem oder mehreren der vorhergehenden Ansprüche, dadurch gekennzeichnet, dass die Gehäuseblöcke (10, 16, 23) mittels Metalldichtungen und/oder Zylinderkopfdichtungen abdichtbar und mittels Durchgangsbolzen in Durchgangsbohrungen (25) fest verbindbar sind.

7. Mischblock nach einem oder mehreren der vorhergehenden Ansprüche, dadurch gekennzeichnet, dass an der der Mischkammer (19) gegenüberliegenden Seite des ersten Gehäuseblocks (10) ein Einsatz (28) aus temperatur-und abbrandbeständigem Material vorgesehen ist.

**Revendications**

1. Bloc-mélangeur pour introduire un mélange gazeux combustible composé d'au moins deux composants dans une chambre de combustion notamment dans la chambre de combustion d'un dispositif pour traiter des matériaux par des chocs de température et des chocs de pression, par l'allumage d'un agent de travail tel que dans des installations d'ébarbage thermiques avec un boîtier ayant au moins deux perçages d'alimentation de gaz (17, 18) reliés par un canal transversal (20) pour chaque composant gazeux et au moins un perçage d'évacuation de gaz (22, 24) pour évacuer le mélange combustible vers la chambre de combustion et un dispositif d'allumage à l'intérieur du bloc-mélangeur, caractérisé en ce que le boîtier se compose de plusieurs blocs de boîtier séparables (10, 16, 23) dont le premier bloc (10) comporte au moins deux perçages de raccordement de gaz (11) avec des soupapes de fermeture (14) et un second bloc (16) qui comporte les perçages d'alimentation de gaz (17, 18) avec un canal transversal (20) ainsi qu'une liaison transversale (21) pour fournir les composantes respectives de chaque perçage d'alimentation de gaz (17, 18) à une chambre de mélange (19) située à l'intérieur du bloc ainsi qu'un perçage d'évacuation de gaz (22) communiquant avec la chambre de mélange, au moins une liaison transversale (21) entre la chambre de mélange et le perçage d'alimentation de gaz étant réalisée comme cavité par fraisage et/ou perçage dans la surface frontale du second bloc (16) tournéevers le premier bloc (10).

2. Bloc-mélangeur selon la revendication 1, caractérisé en ce que chaque perçage de raccordement de gaz (11) comporte des moyens de raccordement (12) pour une conduite de gaz et en ce que le perçage de raccordement de gaz (11) peut être fermé vis-à-vis du perçage d'alimentation de gaz (17) par une soupape (14).

3. Bloc-mélangeur selon la revendication 1 ou 2, caractérisé en ce que chacun des perçages d'alimentation de gaz (17, 18) est réalisé sous la forme d'un perçage traversant longitudinal, à tracé parallèle à travers le second bloc (16) du boîtier de bloc-mélangeur.

4. Bloc-mélangeur selon la revendication 1, 2 ou 3, caractérisé en ce que la chambre de mélange (19) et un perçage d'evacuation de gaz (22) associé, est réalisée comme perçage traversant longitudinal dans le second bloc (16) du boîtier du bloc-mélangeur.

5. Bloc-mélangeur selon l'une des revendications précédentes, caractérisé en ce que le second bloc de boîtier (16) du boîtier du bloc-mélangeur est relié à un troisième bloc de boîtier (23) en forme de bride, en ce que le troisième bloc comporte un perçage d'alimentation de gaz (24) aligné sur le perçage d'évacuation de gaz (22) du bloc de boîtier (16) et en ce qu'au moins un canal transversal (20) entre les perçages d'alimentation de gaz (17, 18) est réalisé sous forme de cavité par fraisage et/ou perçage dans la surface frontale du second bloc (16) tournée vers le troisième bloc (23).

6. Bloc-mélangeur selon l'une quelconque des revendications précédentes, caractérisé en ce que les blocs de boîtier (10, 16, 23) sont rendus étanches par des joints d'étanchéité métalliques et/ou des joints de tête de cylindre et sont reliés solidement par des goujons traversants dans des perçages traversants (25).

7. Bloc-mélangeur selon l'une ou plusieurs des revendications précédentes, caractérisé en ce du côté opposé à la chambre de mélange (19) du premier bloc de boîtier (10), il est prévu un insert (28) en un matériau résistant à la température et à la combustion.

**Claims**

1. A mixing block for admitting a combustible gaseous mixture consisting of at least two components into a combustion chamber, especially the combustion chamber of an apparatus for treating materials by means of temperature and pressure shocks by igniting a working medium, such as thermal de-burring equipment, comprising a housing having at least two gas supply bores (17, 18) for each gas component connected to one another by a transverse duct (20) and at least one gas discharge bore (22, 24) for conveying the combustible mixture to the combustion chamber and an ignition device within the mixing block, characterised in that, the housing consists of a plurality of separable housing units (10, 16, 23) of which a first unit (10) includes at least two gas connection bores (11) provided with shut off valves (14) and a second unit (16) which includes gas supply bores (17, 18) with a transverse duct (20) as well as a transverse connection (21) for supplying the respective components from each gas supply bore (17, 18) to a mixing chamber (19) arranged inside the block as well as the gas discharge bore (22) in communication with the mixing chamber, wherein at least one transverse connection (21) between the mixing chamber and a gas supply bore is formed as a recess in the end surface of the second unit (16) facing the first unit (10), by milling out and/or drilling.

2. A mixing block according to claim 1, characterised in that, each gas connecting bore (11) includes connecting means (12) for a gas line and that the gas connecting bore (11) can be closed with respect to the gas supply bore (17) by a valve (14).

3. A mixing block according to claim 1 or 2, characterised in that, each of the gas supply bores (17, 18) are formed as parallel elongate through bores extending through the second unit (16) of the mixing block housing.

4. A mixing block according to claim 1, 2 or 3, characterised in that, the mixing chamber (19) and an associated gas discharge bore (22) is formed as an elongate through bore through the second unit (16) of the mixing block housing.

5. A mixing block according to one of the preceding claims, characterised in that, the second housing unit (16) of the mixing block housing is connected to a third, flange-like housing unit (23) that the third unit includes a gas discharge bore (24) aligned with the gas discharge bore (22) of the housing unit (16) and that at least one transverse duct (20) between the gas supply bores (17, 18) is formed as a recess in the end surface of the second unit (16) facing the third unit (23) by milling out and/or drilling.

6. A mixing block according to one or more of the preceding claims, characterised in that, the housing units (10, 16, 23) are sealable by means of metal seals and/or cylinder head gaskets and are rigidly connectible by means of bolts passing through bores (25).

7. A mixing block according to one or more of the preceding claims, characterised in that, an insert (28) of a material resistant to temperature and burning is provided on the side of the first housing unit (10) opposite to the mixing chamber (19).

*1 / 1*